# EUROPEAN PATENT APPLICATION

(11) **EP 4 804 643 A1**
(43) Date of publication of application: **09.09.2026**
(21) Application number: 24893144.6
(22) Date of filing: 24.10.2024
(51) Int. Cl.: H04W 52/02

(54) **COMMUNICATION METHOD AND COMMUNICATION APPARATUS**

(30) Priority: 24.11.2023 CN 202311603298
(71) Applicant: Huawei Technologies Co., Ltd., Shenzhen, Guangdong 518129 (CN)
(72) Inventor: WANG, Manzhu, Shenzhen, Guangdong 518129 (CN); ZHANG, Yangyang, Shenzhen, Guangdong 518129 (CN); MA, Siqi, Shenzhen, Guangdong 518129 (CN); YU, Zheng, Shenzhen, Guangdong 518129 (CN)
(74) Representative: Pfenning, Meinig & Partner mbB
(86) International application number: PCT/CN2024/127058
(87) International publication number: WO 2025/107986

(57) **Abstract**

This application relates to the field of communication technologies, and provides a communication method and a communication apparatus. The method includes: generating first information, where the first information includes second information and third information, the second information is used to wake up a first terminal and determine the third information, and the third information is used to schedule a first transmission resource of the first terminal; and sending the first information. According to the method, information resources can be flexibly and fully used based on a network load status.

## Description

This application claims priority to Chinese Patent Application No. 202311603298.0, filed with the China National Intellectual Property Administration on November 24, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method, a communication apparatus, and a computer-readable storage medium.

### BACKGROUND

With rapid development of the fifth generation (the fifth generation, 5G) mobile communication technology, a 5G communication system poses higher requirements on power consumption, a latency, reliability, and the like. For example, power consumption of user equipment (user equipment, UE) is also critical to the 5G communication system. 5G devices support higher rates and larger bandwidths, and also bring great challenges to energy saving. For UE without continuous power supply, such as some sensors deployed for monitoring and measurement, a battery of the UE is required to have a service life of up to several years. In internet of things scenarios, such as wearable devices and medical monitoring devices, the battery life needs to last for one to two weeks while performance is maintained.

To implement low power consumption of a terminal, a new receiver architecture of a receive end device has been proposed in recent years. The receive end device includes a main receiver (main receiver, MR) and a low power wake up receiver (low power wake up receiver, LP-WUR). The MR is configured to normally receive data/perform service transmission, and the LP-WUR is configured to monitor and process a low power wake up signal (low power wake up signal, LP-WUS) sent by a network device. When the MR does not transmit data such as a service, the MR may enter a sleep state, to reduce "standby" power consumption of the terminal, and the LP-WUR is turned on to monitor the LP-WUS. After receiving the LP-WUS, the LP-WUR wakes up the MR to transmit data such as a service. In this manner, the LP-WUR monitors the LP-WUS, and the MR is woken up when needed, so that the MR can be turned off when not in use, thereby reducing power consumption of the UE. However, in some cases (for example, when a network is lightly loaded), the network device needs to wake up a small quantity of UE, and some information bits in the LP-WUS are wasted.

### SUMMARY

Embodiments of this application provide a communication method, a communication apparatus, and a computer-readable storage medium, to flexibly and fully use an information resource based on a network load status. The following technical solutions are provided in embodiments of this application.

According to a first aspect, a communication method is provided. The method may be performed by a network device (for example, a base station), may be performed by a module (for example, a processor, a chip, or a chip system) used in the network device, or may be implemented by a logical node, a logical module, or software that can implement all or some functions of the network device. The method includes: generating first information, where the first information includes second information and third information, the second information is used to wake up a first terminal, and the third information is used to schedule a first transmission resource of the first terminal; and sending the first information.

In the foregoing solution, the first information may be wake-up information or a wake-up signal. In some cases (for example, when a network is lightly loaded or when a small quantity of UE needs to be woken up), there may be spare bits in the first information. The network device may flexibly and fully use the spare bits in the first information, and include the third information in the first information (for example, the wake-up information) for sending to the first terminal, so that the first terminal flexibly determines the first transmission resource (for example, a time/frequency domain position) based on the third information (for example, scheduling information) carried in the first information, and complex blind detection is not required. This reduces complexity, a latency, and power consumption in determining the first transmission resource by the first terminal.

In a possible implementation, before sending the first information, the method further includes: sending first indication information, where the first indication information indicates that the first information includes the second information and the third information.

Before the first information is sent, the network device may notify, by sending the first indication information, a terminal device of a type of information included in the first information (for example, the first information includes the second information and the third information). If the first information includes the second information and the third information, the terminal device may process the first information in a processing manner corresponding to the second information and the third information, to avoid a case in which the terminal device (for example, the first terminal) incorrectly processes, as one type of information, information of different types that is carried in the first information.

In a possible implementation, the first information further includes fourth indication information, and the fourth indication information indicates that the first information includes the second information and the third information.

In some cases, the network device includes the fourth indication information in the first information for delivering to a terminal device together. In this way, the network device does not need to deliver the fourth indication information through separate signaling. Correspondingly, the terminal device also does not need to separately receive the fourth indication information. This saves network resources.

In a possible implementation, a format of the first information indicates that the first information includes the second information and the third information.

In some cases, the format of the first information may include different representation forms, the different representation forms indicate that the first information includes the second information and the third information, and no additional indication information needs to be carried, thereby reducing resource overheads.

In a possible implementation, the second information is an identifier of the first terminal.

Because the identifier of the first terminal is unique, the identifier of the first terminal is used as the second information, so that the first terminal that needs to be woken up can be accurately indicated.

In a possible implementation, the first information includes a bitmap, and the second information is a first bit in the bitmap.

When the first information includes the bitmap, the first bit indicates to wake up the first terminal, and wakeup of the first terminal does not need to be indicated by the identifier of the first terminal. This can save more bits, and the saved bits can be used to wake up more terminals simultaneously.

In a possible implementation, an offset of the first bit is indicated by second indication information, or an offset of the first bit is determined based on a length of the second information and a ranking of the first terminal, or an offset of the first bit is predefined.

The first bit indicates to wake up the first terminal, and a correspondence between the offset of the first bit and the first terminal may be flexibly determined in different indication manners (for example, a predefined manner, a manner of indicating by indication information, and a manner of determining based on the identifier of the first terminal).

In a possible implementation, the offset of the first bit is determined according to the following rule: the offset of the first bit = (M mod N) + 1, where mod is a modulo operation, M is the ranking of the first terminal, N is the length of the second information, and the ranking of the first terminal is a sequence number of the first terminal in a terminal group.

In a possible implementation, the first information is periodically sent information, a first period and a second period are two adjacent periodicities, and the third information in the first information in the second period is different from the third information in the first information in the first period.

Because the first information is sent periodically, in a current period (for example, the second period), when the network device delivers third information through first information, the network device may send changed scheduling information to the terminal device (for example, the first terminal) in a form of the third information, and the terminal device may update, based on the third information received in the current period, scheduling information indicated by third information in a previous period (for example, the first period), and does not need to transmit a part of the scheduling information that remains unchanged in the first period and the second period, thereby reducing resource overheads for transmitting the scheduling information and updating the scheduling information.

According to a second aspect, a communication method is provided. The method may be performed by a terminal device (for example, a first terminal), or may be performed by a module (for example, a processor, a chip, or a chip system) used in the terminal device, or may be implemented by a logical node, a logical module, or software that can implement all or some functions of the terminal device. The method includes: receiving first information, where the first information includes second information and third information, the second information is used to wake up a first terminal, and the third information is used to schedule a first transmission resource of the first terminal; and determining the first transmission resource based on the third information.

In the foregoing solution, the first information may be wake-up information or a wake-up signal. In some cases (for example, when a network is lightly loaded or when a small quantity of UE needs to be woken up), there may be spare bits in the first information. A network device may flexibly and fully include the third information in the first information (for example, the wake-up information) for sending to the first terminal. Correspondingly, the first terminal may also flexibly determine the first transmission resource (for example, a time/frequency domain position) based on the third information (for example, scheduling information) carried in the first information, and complex blind detection is not required. This reduces complexity, a latency, and power consumption in determining the first transmission resource by the first terminal.

In a possible implementation, before receiving the first information, the method further includes: receiving first indication information, where the first indication information indicates that the first information includes the second information and the third information.

Before the first information is received, the terminal device may determine, based on the received first indication information, a type of information included in the first information (for example, the first information includes the second information and the third information). If the first information includes the second information and the third information, the terminal device may process the first information in a processing manner corresponding to the second information and the third information, to avoid a case in which the first terminal incorrectly processes, as one type of information, information of different types that is carried in the first information.

In a possible implementation, the first information further includes fourth indication information, and the fourth indication information indicates that the first information includes the second information and the third information.

In some cases, the network device includes the fourth indication information in the first information for delivering to the terminal device together. In this way, the network device does not need to deliver the fourth indication information through separate signaling. Correspondingly, the terminal device also does not need to separately receive the fourth indication information. This saves network resources.

In a possible implementation, a format of the first information indicates that the first information includes the second information and the third information.

In some cases, the format of the first information may include different representation forms, the different representation forms indicate that the first information includes the second information and the third information, and no additional indication information needs to be carried, thereby reducing resource overheads.

In a possible implementation, the second information is an identifier of the first terminal.

Because the identifier of the first terminal is unique, the identifier of the first terminal is used as the second information, so that the first terminal that needs to be woken up can be accurately indicated.

In a possible implementation, the first information includes a bitmap, and the second information is a first bit in the bitmap.

When the first information includes the bitmap, the first bit indicates to wake up the first terminal, and wakeup of the first terminal does not need to be indicated by the identifier of the first terminal. This can save more bits, and the saved bits can be used to wake up more terminals simultaneously.

In a possible implementation, an offset of the first bit is indicated by second indication information, or an offset of the first bit is determined based on a length of the second information and a ranking of the first terminal, or an offset of the first bit is predefined.

The first bit indicates to wake up the first terminal, and a correspondence between the offset of the first bit and the first terminal may be flexibly determined in different indication manners (for example, a predefined manner, a manner of indicating by indication information, and a manner of determining based on the identifier of the first terminal).

In a possible implementation, the offset of the first bit is determined according to the following rule: the offset of the first bit = (M mod N) + 1, where mod is a modulo operation, M is the ranking of the first terminal, N is the length of the second information, and the ranking of the first terminal is a sequence number of the first terminal in a terminal group.

In a possible implementation, the first information is periodically sent information, a first period and a second period are two adjacent periodicities, and the third information in the first information in the second period is different from the third information in the first information in the first period.

Because the first information is sent periodically, in a current period (for example, the second period), when the network device delivers third information through first information, the network device may send changed scheduling information to the terminal device (for example, the first terminal) in a form of the third information, and the terminal device may update, based on the third information received in the current period, scheduling information indicated by third information in a previous period (for example, the first period), and does not need to transmit a part of the scheduling information that remains unchanged in the first period and the second period, thereby reducing resource overheads for transmitting the scheduling information and updating the scheduling information.

According to a third aspect, another communication method is provided. The method may be performed by a network device (for example, a base station), may be performed by a module (for example, a processor, a chip, or a chip system) used in the network device, or may be implemented by a logical node, a logical module, or software that can implement all or some functions of the network device. The method includes: generating fourth information, where the fourth information indicates whether a first terminal group is to detect wake-up information on a first occasion, and the first terminal group includes at least one terminal; and sending the fourth information, where if the fourth information indicates the first terminal group to detect the wake-up information on the first occasion, the first occasion is an occasion on which the first terminal group detects first wake-up information; or if the fourth information indicates the first terminal group not to detect the wake-up information on the first occasion, the first occasion is an occasion on which the terminal group does not detect the wake-up information.

In the foregoing method, in comparison with the conventional technology in which a network device does not indicate whether a first terminal group detects wake-up information on a first occasion, and the first terminal group is to detect the wake-up information on the first occasion, in this application, the network device sends the fourth information to the first terminal group, so that the first terminal group determines whether to detect the wake-up information on the first occasion. When the fourth information indicates that the wake-up information needs to be detected on the first occasion, each terminal (for example, a first terminal) in the first terminal group detects the first wake-up information on the first occasion. When the fourth information indicates that the wake-up information does not need to be detected on the first occasion, each terminal (for example, the first terminal) in the first terminal group does not detect the wake-up information on the first occasion (for example, in this case, each terminal is in a sleep state or an off state on the first occasion). Therefore, a case in which each terminal in the terminal group continuously monitors the wake-up information when the wake-up information does not need to be detected is avoided, and power consumption of each terminal (for example, the first terminal) in the terminal group is reduced.

In a possible implementation, the fourth information is included in third indication information, the third indication information further includes fifth information, the fifth information is a less significant bit adjacent to the fourth information, and the fifth information indicates whether a second terminal group is to detect the wake-up information on a second occasion; and if the fifth information indicates the second terminal group not to detect the wake-up information on the second occasion, sending sixth information on the second occasion, where the sixth information is used to schedule a first transmission resource of the first terminal, and the first terminal belongs to the first terminal group; or if the fifth information indicates the second terminal group to detect the wake-up information on the second occasion, sending seventh information, where a format of the seventh information is different from a format of the sixth information, the seventh information is used to schedule the first transmission resource of the first terminal, and the first terminal belongs to the first terminal group.

In some cases, when the fifth information indicates the second terminal group to detect the wake-up information on the second occasion, the network device sends the seventh information (for example, DCI) to the first terminal group, so that the first terminal determines the first transmission resource from the DCI through blind detection. However, when the fifth information indicates the second terminal group not to detect the wake-up information on the second occasion, the network device determines to send the sixth information to the first terminal on the second occasion. Correspondingly, the first terminal receives the sixth information on the second occasion, and can determine the first transmission resource based on the sixth information without complex blind detection. This reduces complexity, a latency, and power consumption in determining the first transmission resource by the first terminal.

In a possible implementation, the third indication information includes a plurality of bits, there is a preset one-to-one correspondence between the plurality of bits and a plurality of terminal groups, each of the plurality of bits indicates a different terminal group in the plurality of terminal groups, and before the fourth information is sent, the method further includes: sending eighth information, where the eighth information indicates a terminal group corresponding to each of the plurality of bits received each time.

Before sending the fourth information, the network device sends the eighth information, where the eighth information indicates the terminal groups corresponding to the plurality of bits received each time. The network device may configure each of the plurality of bits to indicate different terminal groups in different scheduling times, so that each terminal group has an opportunity to preferentially receive the wake-up information, thereby implementing fair scheduling and reducing a response latency of the terminal device.

In a possible implementation, the third indication information is carried in second wake-up information, the second wake-up information is located on a third occasion, and the third occasion is before the first occasion.

On the third occasion, the first terminal receives the second wake-up information, and determines, based on the third indication information in the second wake-up information, terminal groups that need to detect the wake-up information on different occasions. In this way, each terminal group can be notified in time of an occasion on which the terminal group needs to be woken up, to avoid a case in which some terminal groups still monitor the wake-up information on an occasion on which the terminal groups do not need to detect the wake-up information.

In a possible implementation, the second wake-up information is a first piece of wake-up information on the third occasion.

The third indication information is carried in the second wake-up information, and the second wake-up information is the first piece of wake-up information on the third occasion. This is equivalent to that the third indication information is carried in first wake-up information on the third occasion, so that the terminal can quickly obtain the third indication information through parsing.

In a possible implementation, that the fourth information indicates whether the first terminal group is to detect the wake-up information on the first occasion includes: A format of the fourth information indicates whether the first terminal group is to detect the wake-up information on the first occasion.

In some cases, the format of the fourth information may include different representation forms, the different representation forms indicate whether the first terminal group is to detect the wake-up information on the first occasion, and no additional indication information needs to be carried, thereby reducing resource overheads.

According to a fourth aspect, another communication method is provided. The method may be performed by a terminal device (for example, a first terminal), or may be performed by a module (for example, a processor, a chip, or a chip system) used in the terminal device, or may be implemented by a logical node, a logical module, or software that can implement all or some functions of the terminal device. The method includes: receiving fourth information, where the fourth information indicates whether a first terminal group is to detect wake-up information on a first occasion, and the first terminal group includes at least one terminal; and if the fourth information indicates the first terminal group to detect the wake-up information on the first occasion, detecting first wake-up information on the first occasion; or if the fourth information indicates the first terminal group not to detect the wake-up information on the first occasion, determining not to detect the wake-up information on the first occasion.

In the foregoing method, in comparison with the conventional technology in which each terminal in a first terminal group detects wake-up information in real time on a first occasion regardless of whether there is wake-up information on the first occasion, in this application, each terminal in the first terminal group receives the fourth information, and determines, based on the fourth information, whether to detect the wake-up information on the first occasion. When the fourth information indicates that the wake-up information needs to be detected on the first occasion, each terminal (for example, a first terminal) in the first terminal group detects the first wake-up information on the first occasion. When the fourth information indicates that the wake-up information does not need to be detected on the first occasion, each terminal (for example, the first terminal) in the first terminal group does not detect the wake-up information on the first occasion (for example, in this case, each terminal is in a sleep state or an off state on the first occasion). Therefore, a case in which each terminal in the terminal group continuously monitors the wake-up information when the wake-up information does not need to be detected is avoided, and power consumption of each terminal (for example, the first terminal) in the terminal group is reduced.

In a possible implementation, the fourth information is included in third indication information, the third indication information further includes fifth information, and the fifth information is a less significant bit adjacent to the fourth information; and if the fourth information indicates the first terminal group to detect the wake-up information on the first occasion, the method further includes: determining the fifth information, where the fifth information indicates whether a second terminal group is to detect the wake-up information on a second occasion; and if the fifth information indicates the second terminal group not to detect the wake-up information on the second occasion, determining to receive sixth information on the second occasion, where the sixth information is used to schedule a first transmission resource of the first terminal, and the first terminal belongs to the first terminal group; or if the fifth information indicates the second terminal group to detect the wake-up information on the second occasion, determining to receive seventh information, where a format of the seventh information is different from a format of the sixth information, the seventh information is used to schedule the first transmission resource of the first terminal, and the first terminal belongs to the first terminal group.

In some cases, when the fifth information indicates the second terminal group to detect the wake-up information on the second occasion, the first terminal in the first terminal group receives the seventh information (for example, DCI) from a network device, and determines the first transmission resource from the DCI through complex blind detection. When the fifth information indicates the second terminal group not to detect the wake-up information on the second occasion, the first terminal determines to receive the sixth information on the second occasion, and may determine the first transmission resource of the first terminal based on the sixth information without complex blind detection. This reduces complexity, a latency, and power consumption in determining the first transmission resource by the first terminal.

In a possible implementation, the third indication information includes a plurality of bits, there is a preset one-to-one correspondence between the plurality of bits and a plurality of terminal groups, each of the plurality of bits indicates a different terminal group in the plurality of terminal groups, and before the fourth information is received, the method further includes: receiving eighth information, where the eighth information indicates a terminal group corresponding to each of the plurality of bits received each time.

Before receiving the fourth information, the first terminal receives the eighth information, where the eighth information indicates the terminal groups corresponding to the plurality of bits received each time. Because each of the plurality of bits may indicate each of the plurality of terminal groups, each terminal group has an opportunity to preferentially receive the wake-up information, thereby implementing fair scheduling and reducing a response latency of the terminal device.

In a possible implementation, the third indication information is carried in second wake-up information, the second wake-up information is located on a third occasion, and the third occasion is before the first occasion.

On the third occasion, the first terminal receives the second wake-up information, and determines, based on the third indication information in the second wake-up information, terminal groups that need to detect the wake-up information on different occasions. In this way, each terminal group can be notified in time of an occasion on which the terminal group needs to be woken up, to avoid a case in which some terminal groups still monitor the wake-up information on an occasion on which the terminal groups do not need to detect the wake-up information.

In a possible implementation, the second wake-up information is a first piece of wake-up information on the third occasion.

The second wake-up information is the first piece of wake-up information on the third occasion. This is equivalent to that the third indication information is carried in first wake-up information on the third occasion, so that the terminal can quickly obtain the third indication information through parsing.

In a possible implementation, that the fourth information indicates whether the first terminal group is to detect the wake-up information on the first occasion includes: A format of the fourth information indicates whether the first terminal group is to detect the wake-up information on the first occasion.

In some cases, the format of the fourth information may include different representation forms, the different representation forms indicate whether the first terminal group is to detect the wake-up information on the first occasion, and no additional indication information needs to be carried, thereby reducing resource overheads.

According to a fifth aspect, a communication apparatus is provided. The communication apparatus may be a terminal device (for example, UE), or may be a module (for example, a processor, a chip, or a chip system) used in a terminal device for execution, or may be a logical node, a logical module, or software that can implement all or some functions of the terminal device. The communication apparatus includes a processor, and optionally, further includes a memory. The memory is configured to store a computer program or instructions, and the processor is configured to execute the computer program or the instructions in the memory. When the processor executes the computer program or the instructions stored in the memory, the communication apparatus is enabled to perform the method performed by the terminal device in the foregoing method embodiments.

According to a sixth aspect, a communication apparatus is provided. The communication apparatus may be a network device (for example, a base station), or may be a module (for example, a processor, a chip, or a chip system) used in the network device for execution, or may be a logical node, a logical module, or software that can implement all or some functions of the network device. The communication apparatus includes a processor, and optionally, further includes a memory. The memory is configured to store a computer program or instructions, and the processor is configured to execute the computer program or the instructions in the memory. When the processor executes the computer program or the instructions stored in the memory, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor, configured to implement functions of the terminal device in the method of the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement functions of the network device in the method of the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium includes a computer program or instructions. When the computer program or the instructions are run, the method performed by the terminal device in the foregoing aspects is implemented.

According to a twelfth aspect, this application provides a computer-readable storage medium. The computer-readable storage medium includes a computer program or instructions. When the computer program or the instructions are run, the method performed by the network device in the foregoing aspects is implemented.

According to a thirteenth aspect, an embodiment of this application provides a communication system, including the communication apparatus according to the fifth aspect and/or the sixth aspect.

Any one of the communication apparatuses, the computer storage media, the computer program products, the chips, or the communication system provided above may be configured to perform the methods provided in the second aspect, the third aspect, and the fourth aspect. Therefore, for beneficial effect that can be achieved by the communication apparatuses, the computer storage media, the computer program products, the chips, or the communication system, refer to beneficial effect of corresponding solutions in the corresponding methods provided above. Details are not described herein again.

### BRIEF DESCRIPTION OF DRAWINGS

FIG. 1 is a diagram of a possible non-limiting communication system according to an embodiment of this application;
FIG. 2 is a diagram of a network structure of a communication system according to an embodiment of this application;
FIG. 3 is a diagram of a structure of communication between a network device and a terminal device according to an embodiment of this application;
FIG. 4A and FIG. 4B are a schematic flowchart of waking up a receive end device according to an embodiment of this application;
FIG. 5 is a diagram of a communication method 500 according to an embodiment of this application;
FIG. 6 is a diagram of another communication method 600 according to an embodiment of this application;
FIG. 7A and FIG. 7B are diagrams of a detection occasion according to an embodiment of this application;
FIG. 8A and FIG. 8B are a schematic flowchart of steps of a communication method according to an embodiment of this application; and
FIG. 9 is a diagram of a structure of a communication apparatus 900 according to an embodiment of this application.

### DESCRIPTION OF EMBODIMENTS

The following describes technical solutions of embodiments of this application with reference to accompanying drawings.

In descriptions of this application, "at least one of the following items (pieces)" or a similar expression thereof means any combination of these items, including any combination of singular items (pieces) or plural items (pieces). For example, at least one item (piece) of a, b, or c may indicate "a", "b", "c", "a and b", "a and c", "b and c", or "a, b, and c", where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

It should be understood that, in this application, descriptions similar to "in a case that...", "if...", "when...", "provided that...", and the like may be used interchangeably.

It should be noted that in this application, the word like "example" or "for example" represents giving an example, an illustration, or a description. Any embodiment or design scheme described as an "example" or "for example" in this application should not be explained as an implementation being more preferred than another embodiment or design scheme. The term like "example" or "for example" used in this application is intended to present a related concept in a specific manner.

Technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio (new radio, NR) access technology. The technical solutions provided in this application may be further applied to a future communication system, for example, a 6th generation (6th generation, 6G) mobile communication system.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

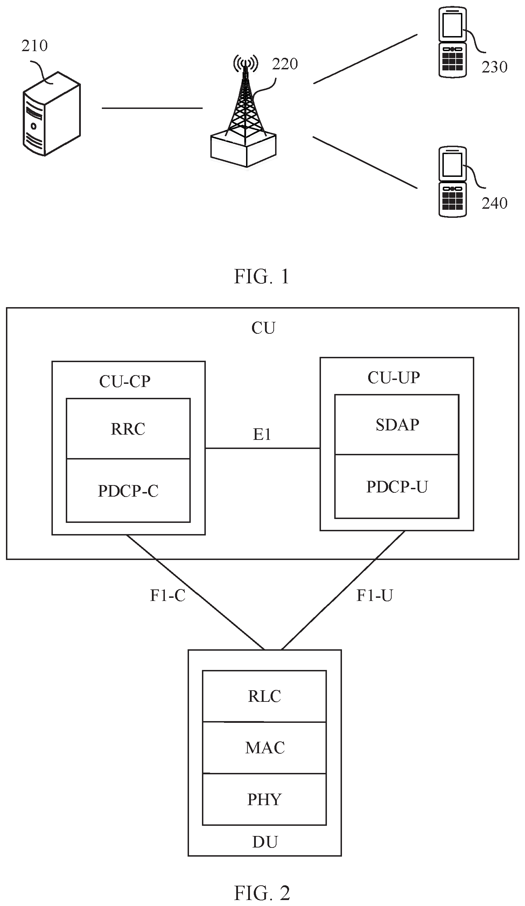

FIG. 1 is a diagram of a possible non-limiting communication system. As shown in FIG. 1, the communication system includes at least one network device (for example, 220 in FIG. 1) and at least one terminal device (for example, 230 and 240 in FIG. 1). The network device may also be referred to as a radio access network (radio access network, RAN) node or a radio access network device, and is configured to help a terminal device implement wireless access. The network device may be a base station. The base station may broadly cover various names in the following, or may be replaced with the following names, for example, a NodeB (NodeB), an evolved NodeB (evolved NodeB, eNB), a next generation NodeB (next generation NodeB, gNB), a next generation evolved NodeB (next generation evolved NodeB, ng-eNB), a relay station, an access point, a transmission point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home NodeB, a network controller, an access node, a radio node, an access point (access point, AP) in a wireless fidelity (wireless fidelity, Wi-Fi) system, a transmission node, a transceiver node, a baseband unit (baseband unit, BBU), a remote radio unit (remote radio unit, RRU), an active antenna unit (active antenna unit, AAU), or a remote radio head (remote radio head, RRH). The base station may be a macro base station, a micro base station, a pico base station, a small cell, a relay station, a balloon station, a relay node, a donor node, or the like, or a combination thereof. The base station may alternatively be a communication module, a modem, or a chip that is disposed in the foregoing device or apparatus. The base station may alternatively be a network device in a 6G network, a device that performs a function of a base station in a future communication system, or the like. The base station may support networks using a same access technology or different access technologies. The base station may be fixed or movable. For example, a helicopter or an unmanned aerial vehicle may be configured as a mobile base station, and one or more cells may move based on a position of the mobile base station. In other examples, a helicopter or an unmanned aerial vehicle may be configured as a device for communicating with another base station. Neither of a specific technology and a specific device form used by the network device is limited in embodiments of this application.

In a network structure of a communication system, as shown in FIG. 2, a network device may be a radio access device including a central unit (central unit, CU) node, a distributed unit (distributed unit, DU) node, or including a CU node and a DU node. The radio access device including the CU node and the DU node splits protocol layers of a gNB in an NR system. Functions of some protocol layers are centrally controlled by a CU, and functions of some or all of the remaining protocol layers are distributed in a DU. The DU is centrally controlled by the CU. Optionally, as shown in FIG. 2, the CU may be further divided into a central unit-control plane (central unit-control plane, CU-CP) and a central unit-user plane (central unit-user plane, CU-UP). The CU-CP is responsible for a control plane function, mainly including RRC and a packet data convergence protocol (packet data convergence protocol, PDCP) that corresponds to a control plane, namely, a PDCP-C. The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP that corresponds to a user plane (namely, a PDCP-U). The SDAP is mainly responsible for processing data of a core network and mapping a flow to a bearer. The PDCP-U is mainly responsible for encryption and decryption, integrity protection, header compression, sequence number maintenance, data transmission, and the like on a data plane. The CU-CP and the CU-UP are connected to each other through an E1 interface. On behalf of the gNB, the CU-CP is connected to the core network through an NG interface, and is connected to the DU through an F1 interface-control plane, namely, an F1-C. The CU-UP is connected to the DU through an F1 interface-user plane, namely, an F1-U. It is clear that, in another possible implementation, the PDCP-C is alternatively in the CU-UP.

In an optional embodiment, the communication system shown in FIG. 1 may further include a core network device (for example, 210 in FIG. 1). The core network device is a device in a core network (core network, CN) that provides service support for a terminal device. For example, the core network device may be an access and mobility management function (access and mobility management function, AMF) entity, a session management function (session management function, SMF) entity, a user plane function (user plane function, UPF) entity, or the like. Examples are not listed one by one herein. The AMF entity may be responsible for access management and mobility management of the terminal device. The SMF entity may be responsible for session management, for example, user session establishment. The UPF entity may be a functional entity on the user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

The terminal device is a device having a wireless transceiver function, and may be deployed on land, including an indoor device, an outdoor device, a handheld device, a wearable device, or a vehicle-mounted device; may be deployed on a water surface (for example, on a ship); or may be deployed in the air (for example, on an aircraft, a balloon, or a satellite). A scenario in which the terminal device is located is not limited in embodiments of this application.

The terminal device may also be referred to as a terminal, user equipment (user equipment, UE), a mobile station (mobile station, MS), a mobile terminal (mobile terminal, MT), or the like. The terminal device in embodiments of this application may be a mobile phone (mobile phone), a tablet computer (Pad), a computer with a wireless transceiver function, a wireless modem (modem), a handset (handset), a laptop computer (laptop computer), or a machine type communication (machine type communication, MTC) terminal, or may be a wireless terminal used in a scenario like virtual reality (virtual reality, VR), augmented reality (augmented reality, AR), industrial control (industrial control), self driving (self driving), telemedicine (remote medical), smart grid (smart grid), transportation safety (transportation safety), smart city (smart city), or smart home (smart home). In this application, the terminal device and a chip that can be used in the terminal device are collectively referred to as a terminal device. It should be understood that a specific technology and a specific device form used by the terminal device are not limited in embodiments of this application.

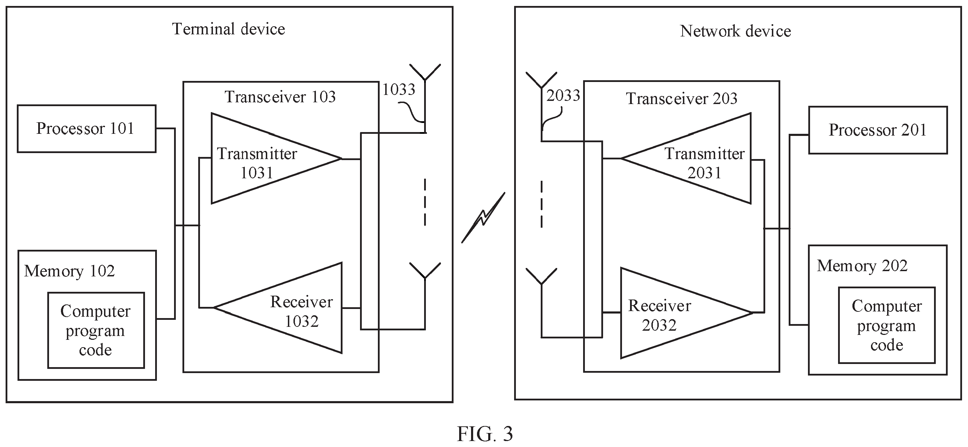

In an example, communication between a network device (for example, 220) and a terminal device (for example, 230) in the communication system shown in FIG. 1 may be performed in a form shown in FIG. 3. As shown in FIG. 3, the terminal device includes a processor 101, a memory 102, and a transceiver 103. The transceiver 103 includes a transmitter 1031, a receiver 1032, and an antenna 1033. The network device includes a processor 201, a memory 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the network device through the antenna 1033. The transmitter 2031 may be configured to send transmission control information to the terminal device through the antenna 2033. The receiver 2032 may be configured to receive, through the antenna 2033, transmission feedback information sent by the terminal device.

Before a method for determining a transmission resource according to this application is described, related terms in this application are first briefly described.

### (1) Physical downlink control channel (physical downlink control channel, PDCCH)

The PDCCH is used to carry scheduling information and other control information, for example, transmission of downlink control information (downlink control information, DCI), scheduling allocation of a physical downlink shared channel (physical downlink shared channel, PDSCH), an uplink scheduling grant, power control, and uplink retransmission information. The PDSCH is used to transmit downlink data.

### (2) PDCCH resource scheduling

Control information carried on a PDCCH is referred to as DCI. The DCI is encoded and then transmitted in a unit of control channel element (Control channel element, CCE). The DCI has a plurality of formats. For example, Format 1_0 and Format 1_1 indicate scheduling of a PDSCH. DCI with different content is scrambled and distinguished by using different radio network temporary identifiers (Radio Network Temporary Identifiers, RNTIs). UE needs to first demodulate DCI on a PDCCH, and then can demodulate, at a corresponding resource position, PDSCH (for example, a broadcast message, paging, and UE data) belonging to the UE.

A position where DCI may be transmitted is referred to as one PDCCH candidate (PDCCH candidate). A process in which the UE decodes the PDCCH candidate is referred to as blind detection. To enable the UE to successfully decode the DCI on the PDCCH, information such as a CCE index, an aggregation level, and an RNTI needs to be calculated. However, the UE usually does not know the information in advance, and the information dynamically changes in most cases. The UE may obtain information in a specific range of the DCI carried on the PDCCH based on information in the specific range and a predefined parameter or signaling message. Within this range, the UE decodes the DCI on the PDCCH according to a trial-and-error method based on different types of parameters (for example, a CCE index, an aggregation level, and an RNTI).

The UE obtains, based on the DCI, time domain scheduling information and frequency domain scheduling information corresponding to the PDSCH. The time domain scheduling information includes a slot offset value K0 for PDSCH scheduling, a time domain start symbol S, and a quantity L of time domain symbols. A value corresponding to the time domain resource information bit is actually an index for querying a time domain resource allocation table. In addition, the UE may obtain the time domain resource allocation table in three manners: standard predefinition, a system message, or higher layer signaling. Finally, a time domain resource scheduling status of the PDSCH may be determined based on the index. For example, when the UE is in a radio resource control (radio resource control, RRC) connected state, the UE may obtain a configuration table based on a PDSCH allocation list in a higher layer parameter PDSCH configuration, and then obtain the time domain scheduling information based on a table lookup index determined based on the DCI. Frequency domain resource scheduling of the PDSCH is classified into Type0 and Type1 based on whether scheduled resource blocks (resource blocks, RBs) are consecutive RBs. Type0 indicates non-consecutive RB scheduling, and Type1 indicates consecutive RB scheduling. For Type0, because frequency domain resources are allocated in a discrete manner, some frequency diversity gains can be obtained. For Type1, because a frequency domain scheduling resource may be represented by using a start RB index and a quantity of scheduled RBs, data bit transmission overheads on the PDCCH can be reduced. Scheduling of Type0 or Type1 is configured through higher layer parameter resource allocation (resource allocation) in a PDSCH configuration parameter set. Resource allocation Type0 indicates Type0 scheduling. Resource allocation Type1 indicates Type1 scheduling. Dynamic switch (dynamic switch) indicates that a scheduling type is indicated as Type0 or Type1 based on a 1-bit field in the DCI. When the PDSCH is scheduled based on format 1_0 of the DCI, a frequency domain resource scheduling type can only be set to Type1. For different scheduling types, the UE determines a frequency domain position of the PDSCH in different manners based on indication of the DCI and RRC signaling.

### (3) Low power-wake up signal (low power-wake up signal, LP-WUS)

It should be noted that, in some scenarios, the low power-wake up signal LP-WUS may alternatively be expressed as an ultra low power-wake up signal LP-WUS.

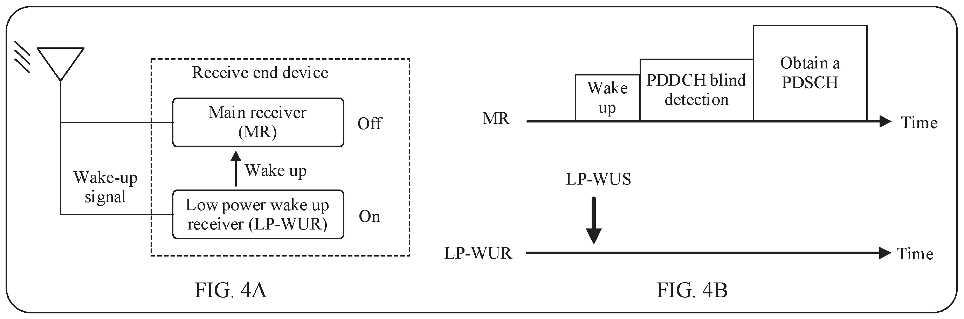

The LP-WUS is a type of low power-wake up signal WUS. In recent years, there is a new receiver architecture of a receive end device. The receiver architecture includes a main receiver MR and a low power wake up receiver (low power wake up receiver, LP-WUR). The MR is configured to normally receive data/service transmission. The LP-WUR is configured to monitor an LP-WUS signal sent by a network device (for example, a base station side). As shown in FIG. 4A, when the MR of the receive end device (for example, UE) is not performing data/service data transmission, the MR is usually in an off or sleep state, and the LP-WUR is in an on state to monitor the LP-WUS from the network device (for example, a base station side). For example, as shown in FIG. 4B, after receiving the LP-WUS, the LP-WUR wakes up the MR to transmit data/service data. In this case, after the MR is woken up, the MR first performs PDCCH blind detection, obtains correct DCI in the PDCCH through demodulation, and then obtains, based on the DCI through demodulation, a PDSCH belonging to the MR.

The foregoing briefly describes related terms in this application. The following describes a communication method provided in this application.

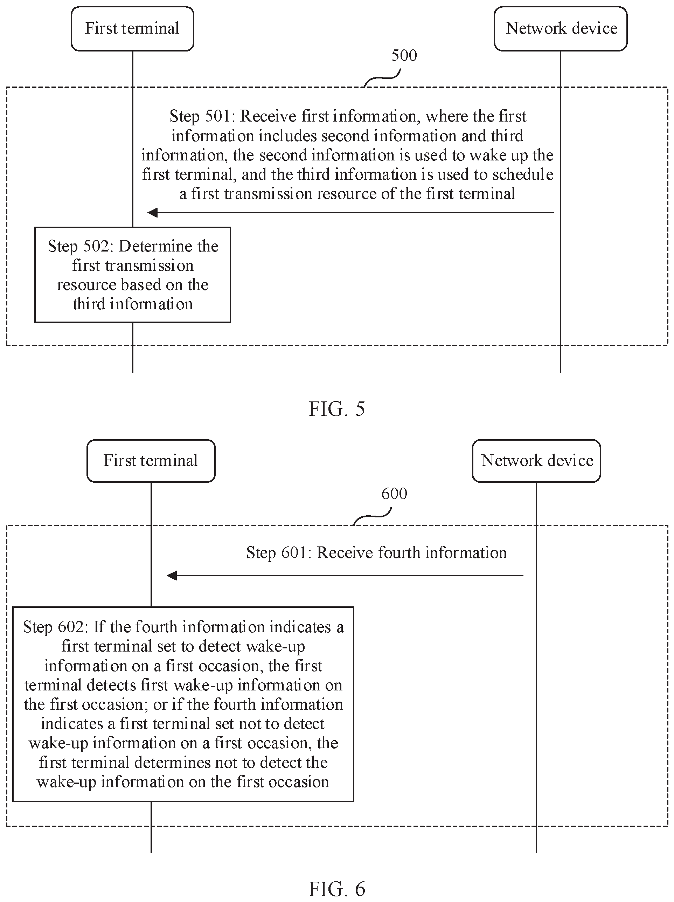

In some cases (for example, when a network is lightly loaded), the network device does not need to wake up a plurality of UEs. Correspondingly, the LP-WUS does not need to carry a large amount of wake-up information. In this case, some information bits in the LP-WUS are not used, and information resources are wasted. Therefore, this application provides a communication method 500 (shown in FIG. 5), to reduce power consumption of a terminal device.

Before the method 500 is described, an execution body of the method 500 is first briefly described.

A network device in the method 500 may alternatively be a chip, a chip system, or a processor used in a network device, or may be a logical node, a logical module, or software that can implement all or some functions of a network device. The terminal device may alternatively be a chip, a chip system, or a processor used in a terminal device, or may be a logical node, a logical module, or software that can implement all or some functions of a terminal.

For example, the network device may be the network device 220 in FIG. 1, and the terminal device may be the terminal device 230 or the terminal device 240 in FIG. 1. It should be noted that the terminal device may have the receiver structure shown in FIG. 4A.

It should be further noted that the terminal device (for example, a first terminal or a second terminal) in embodiments of this application may be a type of terminal that supports a low-power receiver.

The following embodiments are described by using an example in which the communication method 500 is performed by the first terminal and the network device. The method 500 includes the following steps.

Step 501: The network device generates first information, and sends the first information; and correspondingly, the first terminal receives the first information, where the first information includes second information and third information, the second information is used to wake up the first terminal, and the third information is used to schedule a first transmission resource of the first terminal.

The first information may be wake-up information or a wake-up signal with a specific length. For example, the first information is an M-bit LP-WUS. In an example, the first information is 01010111. In this case, a length of the first information is M=8 bits.

It should be noted that the first information may include different types of information. In an example, the type of information included in the first information may be wake-up information of one terminal, or may be wake-up information of one terminal and corresponding scheduling information. In another example, the type of information included in the first information may be wake-up information of at least two terminals and corresponding scheduling information. For details, refer to detailed explanations in the following related embodiments. Details are not described herein. The different types of information may be alternatively expressed as information of different types.

In a possible implementation, before the first terminal receives the first information, the method 500 further includes: The first terminal receives first indication information. Correspondingly, before the network device sends the first information, the method 500 further includes: The network device sends the first indication information, where the first indication information indicates that the first information includes the second information and the third information.

The first indication information may be a bit stream, and the first indication information includes at least 1-bit information.

In an implementation, for example, the network device may indicate, by using the 1-bit information, the type of information included in the first information. In this case, the first indication information is the 1-bit information. When the 1-bit information is 1, it indicates that the first information includes the second information and the third information. When the 1-bit information is 0, it indicates that the first information includes ninth information, where the ninth information is wake-up information of a terminal (for example, the first terminal), and a length of the ninth information is greater than a length of the second information. It should be noted that the ninth information may be understood as that the first information includes wake-up information of a terminal but does not include scheduling information of the terminal. For example, the ninth information is the wake-up information of the first terminal, and the length of the ninth information is the same as the length of the first information. However, the second information may also indicate the wake-up information of the first terminal, but the second information is partial bit information of the first information. Therefore, the length of the first information is greater than the length of the second information, and correspondingly, the length of the ninth information is greater than the length of the second information. Correspondingly, when sending the first indication information, the network device may send the first indication information to the first terminal as a separate wake-up information format. For example, the first indication information is 111. The network device may separately send the first indication information to the first terminal. After receiving the first indication information, the first terminal determines, based on the first indication information, the type of information included in the first information subsequently received.

For another example, the first indication information may also include multi-bit information. For example, the first indication information includes 2-bit information. When 2 bits are 00, it indicates that the first information includes the wake-up information (for example, the ninth information) of the first terminal. When the 2-bit information is 11, it indicates that the first information includes the wake-up information (for example, the second information) of the first terminal and the corresponding scheduling information (for example, the third information). The network device may send the 2-bit first indication information to the first terminal as a separate wake-up information format.

Before the first information is received (or sent), the terminal device (or the network device) may determine (or indicate), based on the received (or sent) first indication information, the type of information included in the first information (for example, the first information includes the second information and the third information). If the first information includes the second information and the third information, the terminal device may process the first information in a processing manner corresponding to the second information and the third information, to avoid a case in which the first terminal incorrectly processes, as one type of information, information of different types that is carried in the first information.

In a possible implementation, the first information further includes fourth indication information, and the fourth indication information indicates that the first information includes the second information and the third information.

The fourth indication information may alternatively be a bit stream including at least 2-bit information. A function and a form of the fourth indication information are similar to those of the first indication information. For details, refer to related descriptions of the first information. Details are not described herein again. When delivering the fourth indication information, the network device may include the fourth indication information in the first information, and send the first information and the fourth indication information together to the first terminal. In this way, the network device does not need to deliver the fourth indication information through separate signaling. Correspondingly, the terminal device also does not need to separately receive the fourth indication information. This saves network resources. For example, the fourth indication information is used as a prefix of the first information, and is delivered to the first terminal together with the first information. The first terminal may determine, based on the fourth indication information, the type of information included in the first information.

In an example, the first information is 10101100, and the first indication information is 1 bit. When the 1 bit is 0, it indicates that the first information includes the wake-up information (for example, the ninth information) of the first terminal. When the 1 bit is 1, it indicates that the first information includes the wake-up information (for example, the second information) of the first terminal and the corresponding scheduling information (for example, the third information). The network device may place the 1 bit before the first information to form new first information **0**10101100 or **1**10101100. The network device sends the new first information to the first terminal, and the first terminal determines, based on whether a first bit of the new first information is 0 or 1, the type of information carried in the first information. For example, if the first bit of the new first information received by the first terminal is 1, it indicates that the first information includes the wake-up information of the first terminal and the corresponding scheduling information.

The second information may be the wake-up information (or the wake-up signal) corresponding to the first terminal. After the first terminal detects the second information, the first terminal is woken up. The length of the second information is less than the length of the ninth information. A reason is that when the length of the first information is fixed, and a network is lightly loaded, some bits of the first information indicate a terminal that needs to be woken up, and the other bits indicate scheduling information corresponding to the terminal. In comparison with a manner in which all bits of the first information (for example, the ninth information) are used as the wake-up information of the first terminal, in this manner, it is clear that the length of the second information is less than the length of the ninth information.

The third information may be the scheduling information corresponding to the first terminal, where the scheduling information includes but is not limited to frequency domain resource assignment (frequency domain resource assignment), time domain resource assignment (Time domain resource assignment), and a modulation and coding scheme (modulation and coding scheme).

In a possible implementation, the first information is periodically sent information, a first period and a second period are two adjacent periodicities, and the third information in the first information in the second period is different from the third information in the first information in the first period.

It should be noted that the third information in the first information in the second period being different from the third information in the first information in the first period may be understood as that the first information is the periodically sent information, and the first period and the second period are two adjacent periodicities, where the first period is prior to the second period. When sending the first information to the first terminal in the second period, the network device may compare whether the third information sent in the first period is different from the third information in the second period. If the third information sent in the first period is different from the third information in the second period, the network device may send, in the second period, a part that changes in the third information in the second period compared with the third information in the first period (for example, a time/frequency domain position of the first terminal changes). For a part that remains unchanged, the first terminal may use scheduling information indicated by the third information received in the first period.

It can be learned that, in a current period (for example, the second period), when the network device delivers third information through first information, the network device may send changed scheduling information to the first terminal in a form of the third information, and the first terminal may update, based on the third information received in the current period, scheduling information indicated by third information in a previous period (for example, the first period), and does not need to transmit a part of the scheduling information that remains unchanged in the first period and the second period, thereby reducing resource overheads for transmitting the scheduling information and updating the scheduling information.

In an optional implementation, a format of the first information indicates that the first information includes the second information and the third information.

When the first information is used as wake-up information and has a fixed length, the format of the first information may be represented in different forms. For example, the first information may be represented in a form A or a form B. The network device may indicate, in the form A of the first information, that the first information includes the second information and the third information, and indicate, in the form B, that the first information includes the ninth information. In this way, the type of information carried in the first information can be indicated by the format of the first information, and no additional indication information needs to be carried, thereby helping reduce resource overheads.

In a possible implementation, the second information is an identifier (identifier, ID) of the first terminal.

The identifier of the first terminal may be an international mobile subscriber identity (international mobile subscriber identity, IMSI), a temporary mobile subscriber identity (temporary mobile subscriber identity, TMSI), a globally unique temporary identity (5G globally unique temporary identity, 5G-GUTI), or an international mobile equipment identity (international mobile equipment identity, IMEI). In an actual application, an identifier specifically used as the identifier of the first terminal is not limited in this application.

When the first information includes the second information and the third information, it indicates that some bits of the first information are occupied by the second information. If the first information is K bits, a quantity of terminals that can be indicated by the second information for wakeup is reduced. However, when the first information includes the ninth information, it indicates that all bits of the first information may indicate more terminals. Apparently, the length of the ninth information is greater than the length of the second information. A reason is that when the first information includes the second information and the third information, some bits of the first information are occupied by the third information. Therefore, a quantity of bits occupied by the second information is reduced, and a quantity of terminals that can be woken up based on the first information is also reduced.

Because the identifier of the first terminal is unique, the identifier of the first terminal is used as the second information, so that the first terminal that needs to be woken up can be accurately indicated.

It should be noted that the network device may wake up a terminal in two manners: Manner 1: Wake up one terminal each time. The network device sends one piece of wake-up information, where the piece of wake-up information is used to wake up one terminal. Manner 2: Wake up a plurality of terminals each time. The network device indicates, by using a bitmap, to simultaneously wake up a plurality of terminals.

For example, the network device sends one piece of wake-up information A to the plurality of terminals, where the wake-up information A is used to wake up the first terminal. For example, the network device sends the first information to the first terminal, where the first information includes the ninth information, that is, the first information includes the wake-up information but does not include the scheduling information. In this case, after receiving the first information, the terminal may determine, by parsing the first information, that the terminal is to be woken up.

For another example, when the network is lightly loaded, the network device may indicate, by using a bitmap, a plurality of terminals that need to be simultaneously woken up. The bitmap may be understood as that each bit may indicate one terminal that needs to be woken up. For example, the length of the first information is M bits, each bit corresponds to one terminal, and a value (for example, 0 or 1) of each bit may indicate whether the terminal is to be woken up. For example, the first information is 110, and there are three bits in total that respectively represent three terminals, where 1 indicates wakeup, and 0 indicates no wakeup.

In Manner 1, when the network is lightly loaded, the network device may include the third information in the first information when sending the first information to the terminal (for example, the first terminal), where the second information indicates the terminal that needs to be woken up. In other words, the network device sends the first information, and the first information includes the second information and the third information.

In Manner 2, when the network is lightly loaded, when the network device sends the first information to the terminal (for example, the first terminal), the first information also includes the second information and the third information. The second information may indicate a plurality of terminals that need to be simultaneously woken up, and the third information may indicate scheduling information corresponding to the plurality of terminals. When the network is heavily loaded, the network device may indicate, based on a plurality of bits of the first information that does not carry scheduling information, to wake up more terminals.

It can be learned that, regardless of Manner 1 or Manner 2, the network device may flexibly determine (or indicate), based on a current network load status, whether the first information carries all the wake-up information or carries some wake-up information and scheduling information.

For example, the network device sends the first information to the first terminal, where the length of the first information is M bits, the first information includes the second information and the third information, N1 bits are used to send the second information, N2 bits are used to send the third information, M=N1+N2, and M, N1, and N2 are all positive integers. In Manner 1, the second information may indicate wake-up information of 2^{N1} different terminals. However, the second information can indicate, each time, whether only one terminal is to be woken up. In Manner 2, the second information can wake up N1 terminals simultaneously. In addition, quantities of bits respectively occupied by the second information and the third information in the first information may be predefined in a protocol, or may be indicated by using DCI, RRC, and a media access control-control element (Media Access Control-Control Element, MAC-CE). This is not limited in this application.

In another possible implementation, the first information includes a bitmap, and the second information is a first bit in the bitmap.

That the first information includes the bitmap may be understood as that the first information indicates, by using the bitmap, terminals that need to be simultaneously woken up. The second information is the first bit in the bitmap, and indicates whether a corresponding terminal (for example, the first terminal) is to be woken up. For example, the length of the first information is M bits, each terminal corresponds to one bit in the M bits, and each bit may indicate whether a terminal corresponding to the bit is to be woken up. The second information is a first bit (namely, a 1^{st} bit) in the bitmap. For example, when the network is heavily loaded, the network device may wake up a plurality of terminals at a time by using the bitmap. That the wake-up information of the first information A whose length is M=8 bits is **11**0**1**00**1**0 is used as an example. The eight bits sequentially indicate whether UE 1 to UE 8 are to be woken up. The bit being 1 indicates to wake up the terminal, and the bit being 0 indicates not to wake up the terminal is not to be woken up. It is clear that, based on the first information A, the UE 1, the UE 2, the UE 4, and the UE 7 are to be woken up, and the UE 3, the UE 5, the UE 6, and the UE 8 are not to be woken up.

For another example, when the network is lightly loaded, the network device does not need to wake up a plurality of terminals at a time. In this case, the network device may indicate, based on some bits in the bitmap, a terminal that needs to be woken up, and the remaining bits may indicate scheduling information (for example, third information) corresponding to the to-be-woken-up terminal. That the wake-up information of the first information A whose length is M=8 bits is **11**0**0** 1111 is still used as an example. The first four bits 1100 sequentially indicate whether UE 1 to UE 4 are to be woken up (for example, the UE 1 and the UE 2 are to be woken up), and the last four bits 1111 indicate scheduling information corresponding to the to-be-woken-up terminal (for example, scheduling information of the UE 1 and scheduling information of the UE 2). In the first four bits, 1 indicates to wake up a terminal, and 0 indicates not to wake up a terminal. Apparently, the network device can wake up a plurality of terminals at a time by using a bitmap, and simultaneously send scheduling information of the to-be-woken-up terminals. In comparison with a manner of sending the wake-up information and the scheduling information a plurality of times, this manner saves network resources, and enables a terminal to quickly obtain scheduling information of the terminal without complex blind detection, thereby reducing power consumption.

It can be learned that, when the first information includes the bitmap, the first bit indicates to wake up the first terminal, and wakeup of the first terminal does not need to be indicated by the identifier of the first terminal. This can save more bits, and the saved bits can be used to wake up more terminals simultaneously.

In a possible implementation, an offset of the first bit is indicated by second indication information, or an offset of the first bit is determined based on the length of the second information and a ranking of the first terminal, or an offset of the first bit is predefined.

The offset of the first bit is used to determine a terminal corresponding to the first bit. In an example, the offset of the first bit may be indicated by the second indication information, where the second indication information indicates the terminal corresponding to the first bit, and the second indication information may be DCI, RRC, or MAC-CE signaling. For example, the network device may send the second indication information to the first terminal, and the first terminal may determine, after receiving the second indication information, a bit of the first information at which the first terminal detects whether the first terminal is to be woken up.

In another example, the offset of the first bit may be predefined in a protocol.

In still another example, the offset of the first bit may be determined based on the length of the second information and the ranking of the first terminal. For example, in a possible implementation, the offset of the first bit is determined according to the following rule: the offset of the first bit = (M1 mod M2) + 1, where mod is a modulo operation, M1 is the ranking of the first terminal, M2 is the length of the second information, and the ranking of the first terminal is a sequence number of the first terminal in a terminal group.

In an example, the network device may number (or rank) terminals in the terminal group based on IDs of the terminals. Correspondingly, each terminal corresponds to one sequence number, and the ranking of the first terminal is a sequence number of one terminal in the terminals. That each terminal corresponds to one sequence number may be alternatively described as that each terminal corresponds to one index (index) value, or each terminal corresponds to one index (index) number, or each terminal corresponds to one ranking number. For example, the ranking of the first terminal is an index allocated by the network device to the first terminal.

It should be noted that, the network device may calculate the offset of the first bit according to the rule, and indicate the offset of the first bit to the first terminal based on the second indication information, or may send the ranking M1 of the first terminal to the first terminal based on the second indication information. The first terminal may determine the offset of the first bit according to the foregoing rule and M1, provided that the first terminal knows the foregoing rule.

In this embodiment, the first bit indicates to wake up the first terminal, and a correspondence between the offset of the first bit and the first terminal may be flexibly determined in different indication manners (for example, a predefined manner, a manner of indicating by indication information, and a manner of determining based on the identifier of the first terminal).

It should be further noted that, after the network device sends the first information to the first terminal, and the first terminal receives the first information, the first terminal usually starts to perform demodulation from a more significant bit of the first information (for example, the first terminal obtains the second information from first N bits through demodulation). When the second information indicates to wake up the first terminal, the first terminal continues to demodulate the third information (for example, the scheduling information corresponding to the first terminal) carried in the first information. When the second information indicates not to wake up the first terminal, the first terminal obtains the second information (for example, an LP-WUS) through demodulation and does not perform subsequent demodulation. In addition, the first terminal may perform a demodulation operation after receiving all the wake-up information (for example, the LP-WUS), or may perform demodulation while receiving the wake-up information. This is not limited in this application.

Step 502: The first terminal determines the first transmission resource based on the third information.

The transmission resource may also be referred to as a communication resource, a time-frequency resource, or a resource. The first transmission resource may be a resource that needs to be used by the first terminal to receive data from the network device, for example, a time-frequency domain, a code domain, or a space domain. For example, the first transmission resource includes but is not limited to a time domain resource position, a frequency domain resource position, an encoding and decoding manner, a receiving slot, and a receiving interval.

It should be noted that, because the third information may be a part that changes in scheduling information in the second period compared with scheduling information in the first period, correspondingly, the first transmission resource may also be a part that changes in a transmission resource in the second period compared with a transmission resource in the first period.

After the first terminal determines wakeup based on the second information, the first terminal obtains the third information, for example, the scheduling information of the first terminal. The first terminal determines, based on the scheduling information configured by the network device, the first transmission resource that can be used. The first terminal may receive data or the like from the network device through the first transmission resource.

In conclusion, in some cases (for example, when the network is lightly loaded or when a small quantity of UE needs to be woken up), there may be spare (or idle) bits in the first information. The network device may flexibly and fully use the spare bits in the first information, and include the third information in the first information (for example, the wake-up information) for sending to the first terminal, so that the first terminal flexibly determines the first transmission resource (for example, a time/frequency domain position) based on the third information (for example, the scheduling information) carried in the first information, and complex blind detection is not required. This reduces complexity, a latency, and power consumption in determining the first transmission resource by the first terminal.

After the communication method 500 is described above, this application further provides another communication method 600 shown in FIG. 6. For an execution body in the method 600, refer to related descriptions of the execution body in the method 500. Details are not described herein again. The following embodiments are described by using an example in which the communication method 600 is performed by a first terminal and a network device. The method 600 includes the following steps.

Step 601: The network device generates fourth information and sends the fourth information; and correspondingly, a terminal device receives the fourth information, where the fourth information indicates whether a first terminal group is to detect wake-up information on a first occasion, and the first terminal group includes at least one terminal.

It should be noted that each terminal (for example, UE) group (group) has a corresponding detection occasion on a monitoring occasion (monitoring occasion, MO) of the wake-up information (for example, an LP-WUS), and an LP-WUR of each terminal in the terminal group detects, in the monitoring time period, whether there is an LP-WUS carrying an ID of the terminal. Monitoring occasions of different terminal groups do not overlap.

An occasion may be understood as time, a time period, a detection occasion, detection time, a detection time period, receiving time, a receiving time period, a monitoring occasion, a monitoring time period, or the like. Detection may be understood as monitoring (monitor), receiving (receive), or the like.

The fourth information includes at least 1-bit information. For example, the fourth information is the 1-bit information, and the 1-bit information being 1 indicates the first terminal group to detect the wake-up information on the first occasion, and the 1-bit information being 0 indicates the first terminal group not to detect the wake-up information on the first occasion. For another example, the fourth information is 2-bit information, and the 2 bits being 11 indicates the first terminal group to detect the wake-up information on the first occasion, and the 2 bits being 00 indicates the first terminal group not to detect the wake-up information on the first occasion.

For example, the fourth information generated by the network device is the 1-bit information, and the 1-bit information is sent to the first terminal group. The first terminal group determines, based on a value (for example, 0 or 1) of the 1-bit information, whether to detect the wake-up information on the first occasion.

Step 602: If the fourth information indicates the first terminal group to detect the wake-up information on the first occasion, the first terminal detects first wake-up information on the first occasion; or if the fourth information indicates the first terminal group not to detect the wake-up information on the first occasion, the first terminal determines not to detect the wake-up information on the first occasion, where the first terminal is any terminal in the first terminal group.

Determining not to detect the wake-up information on the first occasion may be understood as sleeping on the first occasion, or entering a sleep state on the first occasion, or determining to sleep on the first occasion, or determining to enter a sleep state on the first occasion.

The fourth information may be separately sent to the first terminal group as an information format (for example, a wake-up information format), or may be carried in some indication information (for example, third indication information mentioned below) for sending to the first terminal group. This is not limited in this application.

The network device sends the fourth information to each terminal in the first terminal group. After receiving the fourth information, each terminal in the first terminal group determines, based on the fourth information, whether to detect the wake-up information on the first occasion. If the fourth information indicates each terminal in the first terminal group to detect the wake-up information on the first occasion, each terminal in the first terminal group detects, on the first occasion, the wake-up information (for example, the first wake-up information) delivered by the network device. If the fourth information indicates each terminal in the first terminal group not to detect the wake-up information on the first occasion, each terminal in the first terminal group does not detect, on the first occasion, the wake-up information (for example, the first wake-up information) delivered by the network device, and is in a sleep state, an off state, or a standby state. In comparison with the conventional technology in which each terminal in a first terminal group detects wake-up information in real time on a first occasion regardless of whether there is wake-up information on the first occasion, in this application, each terminal in the first terminal group receives the fourth information, and determines, based on the fourth information, whether to detect the wake-up information on the first occasion. When the fourth information indicates that the wake-up information needs to be detected on the first occasion, each terminal (for example, the first terminal) in the first terminal group detects the first wake-up information on the first occasion. When the fourth information indicates that the wake-up information does not need to be detected on the first occasion, each terminal (for example, the first terminal) in the first terminal group does not detect the wake-up information on the first occasion (for example, in this case, each terminal is in the sleep state or the off state on the first occasion). Therefore, a case in which each terminal in the terminal group continuously monitors the wake-up information when the wake-up information does not need to be detected is avoided, and power consumption of each terminal (for example, the first terminal) in the terminal group is reduced.

In a possible implementation, the fourth information is included in the third indication information, the third indication information further includes fifth information, and the fifth information is a less significant bit adjacent to the fourth information; and if the fourth information indicates the first terminal group to detect the wake-up information on the first occasion, the method 600 further includes: The first terminal determines the fifth information, where the fifth information indicates whether a second terminal group is to detect the wake-up information on a second occasion; and if the fifth information indicates the second terminal group not to detect the wake-up information on the second occasion, determines to receive sixth information on the second occasion, where the sixth information is used to schedule a first transmission resource of the first terminal, and the first terminal belongs to the first terminal group; or if the fifth information indicates the second terminal group to detect the wake-up information on the second occasion, determines to receive seventh information, where a format of the seventh information is different from a format of the sixth information, the seventh information is used to schedule the first transmission resource of the first terminal, and the first terminal belongs to the first terminal group.

The third indication information is indication information that is of a monitoring occasion and that is periodically sent by the network device to each terminal group. The third indication information may be used as a separate wake-up information (for example, an LP-WUS) format or may be placed before a first piece of wake-up information (for example, a 1^{st} LP-WUS) in a period. The third indication information may indicate whether each terminal group (for example, the first terminal group and the second terminal group) is to detect the wake-up information on a corresponding detection occasion (for example, the first occasion).

The fifth information includes at least 1-bit information. For example, the fifth information is the 1-bit information, and the 1-bit information being 1 indicates the second terminal group to detect the wake-up information on the second occasion, and the 1-bit information being 0 indicates the second terminal group not to detect the wake-up information on the second occasion. For another example, the fifth information is the 3-bit information, and the 3-bit information being 111 indicates the second terminal group to detect the wake-up information on the second occasion, and the 3-bit information being 000 indicates the second terminal group not to detect the wake-up information on the second occasion.

The third indication information includes the fourth information and the fifth information, where the fifth information is the less significant bit adjacent to the fourth information. For example, the third indication information generated by the network device is 3-bit information 110, where the first bit is the fourth information, and the second bit is the fifth information. Each bit in the third indication information indicates one terminal group. After receiving the third indication information, the first terminal group may determine, based on a value (for example, 0 or 1) of a bit that indicates the first terminal group in the third indication information, whether to detect the wake-up information on the first occasion.

For example, in the third indication information 110, the first bit of the third indication information is the fourth information, and the fourth information being 1 indicates that the first terminal group needs to detect the wake-up information (for example, the first wake-up information) on the first occasion. The second bit of the third indication information is the fifth information, and the fifth information is the less significant bit adjacent to the fourth information. The fifth information being 1 indicates that the second terminal group needs to detect the wake-up information (for example, second wake-up information) on the second occasion. The third bit of the third indication information being 0 indicates a third terminal group not to detect the wake-up information (for example, third wake-up information) on a third occasion.

If the fourth information indicates the first terminal group to detect the wake-up information on the first occasion, the method 600 further includes the following step.

Step 603: The first terminal determines the fifth information, where the fifth information indicates whether the second terminal group is to detect the wake-up information on the second occasion; and if the fifth information indicates the second terminal group not to detect the wake-up information on the second occasion, the first terminal determines to receive the sixth information on the second occasion, where the sixth information is used to schedule the first transmission resource of the first terminal, and the first terminal belongs to the first terminal group.

It should be noted that, that the first terminal determines to receive the sixth information on the second occasion indicates that the first terminal detects the wake-up information on the first occasion, and the detected wake-up information is used to wake up the first terminal. If the first terminal detects the wake-up information on the first occasion, but the detected wake-up information is not used to wake up the first terminal, the first terminal does not receive the sixth information on the second occasion.

For example, the third indication information is 10, the first bit is the fourth information, and the second bit is the fifth information. After receiving the third indication information, the first terminal detects whether the fifth information is 0. If the fifth information is 0, it indicates the second terminal group not to detect the wake-up information on the second occasion. In this case, the network device sends the sixth information on the second occasion, where the sixth information is scheduling information corresponding to the first terminal. The first terminal may receive the sixth information on the second occasion, and determine the first transmission resource of the first terminal based on the sixth information, without monitoring a PDCCH, thereby reducing power consumption of the first terminal. It should be noted that, when sending the sixth information, the network device may send the scheduling information in a same format as a format of the wake-up information, and the first terminal may quickly obtain the scheduling information through decoding in a manner of decoding the wake-up information.

In another implementation, the method 600 further includes the following step.

Step 604: If the fifth information indicates the second terminal group to detect the wake-up information on the second occasion, the first terminal determines to receive the seventh information, where a format of the seventh information is different from the format of the wake-up information.

The seventh information may be DCI. It should be noted that, that the format of the seventh information is different from the format of the sixth information may indicate that a modulation scheme of the seventh information is different from a modulation scheme of the sixth information; or an encoding scheme of the seventh information is different from an encoding scheme of the sixth information; or a carrying manner of the seventh information is different from a carrying manner of the sixth information, that is, it may be understood that a processing manner of the seventh information is different from a processing manner of the sixth information. For example, the seventh information and the sixth information may be different in one or more of the following: physical broadcast channel (physical broadcast channel, PBCH) payload generation, scrambling, cyclic redundancy check (cyclic redundancy check, CRC) check bit attachment for a transport block (transport Block, TB), channel coding, rate matching, or a modulation scheme. For example, the modulation scheme of the sixth information includes but is not limited to on-off keying (on-off keying, OOK) modulation and a joint modulation scheme based on orthogonal frequency-division multiplexing (orthogonal frequency-division multiplexing, OFDM) and OOK, and the modulation scheme of the seventh information may be orthogonal frequency-division multiplexing (orthogonal frequency-division multiplexing, OFDM) modulation.

For example, the third indication information is 11, the first bit is the fourth information, and the second bit is the fifth information. If the first terminal detects that the fifth information is 1, it indicates the second terminal group to detect the wake-up information on the second occasion, and the network device sends the wake-up information (for example, the second wake-up information) on the second occasion. After being woken up, the first terminal needs to monitor the DCI that is delivered by the network device and that is carried on the PDCCH, and detect, from the DCI through complex blind detection, the scheduling information corresponding to the first terminal. Then, the first terminal determines complexity of the first transmission resource and power consumption of the first terminal based on the detected scheduling information.

In some cases, when the fifth information indicates the second terminal group to detect the wake-up information on the second occasion, the first terminal in the first terminal group receives the seventh information (for example, the DCI) from the network device, and determines the first transmission resource from the DCI through complex blind detection. When the fifth information indicates the second terminal group not to detect the wake-up information on the second occasion, the first terminal determines to receive the sixth information on the second occasion, and can determine the first transmission resource of the first terminal based on the sixth information without complex blind detection. This reduces complexity, a latency, and power consumption in determining the first transmission resource by the first terminal.

In a possible implementation, the third indication information includes a plurality of bits, there is a preset one-to-one correspondence between the plurality of bits and a plurality of terminal groups, each of the plurality of bits indicates a different terminal group in the plurality of terminal groups, and before the first terminal receives the fourth information, the method 600 further includes: The first terminal receives eighth information, where the eighth information indicates a terminal group corresponding to each of the plurality of bits received each time.

It should be noted that, that each of the plurality of bits indicates the different terminal group in the plurality of terminal groups may be understood as that each of the plurality of bits has a same probability of indicating each terminal in the plurality of terminal groups.

Before sending the third indication information to each terminal group, the network device first sends the eighth information to each terminal (for example, the first terminal) in each terminal group, where the eighth information indicates a terminal group corresponding to each bit in the third indication information. The eighth information may be indicated through higher layer signaling, for example, RRC or MAC-CE signaling, or may be indicated in another manner (for example, DCI). This is not limited in this application.

The third indication information carries K-bit information (for example, 110), that is, the third indication information includes a plurality of bits. The plurality of bits respectively indicate, from a more significant bit to a less significant bit, whether each of K terminal groups is to detect the wake-up information on a corresponding detection occasion. That there is a preset one-to-one correspondence between the plurality of bits and the plurality of terminal groups may be understood as that each bit indicates one terminal group, and a value (for example, 0 or 1) of each bit indicates whether the terminal group corresponding to the bit is to detect the wake-up information on a detection occasion configured by the network device for the terminal group. For example, a single bit being 0 indicates a terminal group A not to detect the wake-up information on a detection occasion T, or a single bit being 1 indicates a terminal group A to detect the wake-up information on a detection occasion T.

It should be noted that, if the third information includes K bits, the K bits may indicate K terminal groups, and each of the K bits may indicate the first terminal group (or a second terminal group, ..., or a K^{th} terminal group). In this way, the network device can fairly schedule each terminal group.

For example, when the network device sends the third indication information to each terminal group, a terminal group indicated by each bit in third indication information sent each time may be different. For example, the third indication information includes 3-bit information. An example is described below.

In third indication information sent for the first time, a first bit of the third indication information indicates the first terminal group, a second bit indicates the second terminal group, and a third bit indicates the third terminal group.

In third indication information sent for the second time, a first bit of the third indication information indicates the second terminal group, a second bit indicates the third terminal group, and a third bit indicates the first terminal group.

In third indication information sent for the third time, a first bit of the third indication information indicates the third terminal group, a second bit indicates the first terminal group, and a third bit indicates the second terminal group.

It can be learned from this example that each bit in the third indication information may indicate the first terminal group (or the second terminal group or the third terminal group). In this way, the network device can fairly schedule each terminal group in one period.

It can be learned that, before receiving the fourth information, the first terminal (namely, any terminal in the first terminal group) receives the eighth information, where the eighth information indicates the terminal groups corresponding to the plurality of bits received each time. Because each of the plurality of bits may indicate each of the plurality of terminal groups, each terminal group has an opportunity to preferentially receive the wake-up information, thereby implementing fair scheduling and reducing a response latency of the terminal device.

In another example, because bits in the third indication information indicate whether different terminal groups is to detect the wake-up information on respective corresponding detection occasions, the network device may indicate, by setting bits with different values in the third indication information, which terminal groups need to be woken up on respective corresponding monitoring occasions. For example, the third indication information carries 3-bit information 110, where a first bit being 1 indicates that the first terminal group needs to detect the wake-up information (for example, wake-up information 1) on an occasion 1, a second bit being 1 indicates that the second terminal group needs to detect the wake-up information (for example, wake-up information 2) on an occasion 2, and a third bit being 0 indicates the third terminal group not to detect the wake-up information on an occasion 3. In this way, when a network is lightly loaded, the network device may send, on the occasion 3 to a terminal (for example, a second terminal) that needs to be woken up in the second terminal group, scheduling information corresponding to the to-be-woken-up terminal. In this way, after being woken up, the terminal may directly obtain the scheduling information of the terminal on the occasion 3, without determining the scheduling information of the terminal by receiving DCI and performing a complex blind detection process, thereby reducing power consumption of the terminal. It should be noted that the network device may send the scheduling information corresponding to the terminal in a format of the wake-up information.

Correspondingly, after receiving the third indication information, each terminal group (for example, the first terminal group) detects a value of a bit corresponding to the terminal group in the third indication information, and detects a value of a next bit adjacent to the bit corresponding to the terminal group. For specific understanding, refer to the following examples.

For example, the third indication information is 3-bit information. The 3-bit information sequentially indicates, from a more significant bit to a less significant bit, the first terminal group, the second terminal group, and the third terminal group. A monitoring occasion allocated by the network device to the first terminal group is an occasion 1, a monitoring occasion allocated to the second terminal group is an occasion 2, and a monitoring occasion allocated to the third terminal group is an occasion 3. After receiving the third indication information, the first terminal group detects whether the most significant bit (namely, a first bit) of the third indication information is 1 and whether a second bit adjacent to the most significant bit is 1. If the most significant bit is 1, it indicates that the first terminal group needs to detect wake-up information 1 on the occasion 1. The wake-up information 1 is used to wake up the first terminal in the first terminal group. In addition, if the second bit is 1, it indicates the second terminal group to detect wake-up information 2 on the occasion 2. In this case, the first terminal group receives the wake-up information 1 on the occasion 1, and determines, based on the wake-up information 1, to wake up the first terminal. After the first terminal is woken up, the first terminal (for example, an MR of the first terminal) monitors DCI that is delivered by the network device and that is carried on a PDCCH, and determines, from the DCI through complex blind detection, scheduling information corresponding to the first terminal. If the second bit is 0, it indicates not to wake up the second terminal group on the occasion 2. In this case, the first terminal group receives the wake-up information 1 on the occasion 1, and determines, based on the wake-up information 1, to wake up the first terminal. After the first terminal is woken up, the first terminal (for example, the MR of the first terminal) detects, on the occasion 2, the scheduling information corresponding to the first terminal. Correspondingly, the network device sends the scheduling information of the first terminal on the occasion 2. If the most significant bit is 0, it indicates the first terminal group not to detect the wake-up information on the occasion 1.

Similarly, after receiving the third indication information, the second terminal group detects whether the second bit of the third indication information is 1 and whether a third bit adjacent to the third indication information is 1. For a detection manner, refer to the detection manner of the first terminal group. Details are not described herein again. Similarly, after receiving the third indication information, the third terminal group detects whether the third bit of the third indication information is 1. Because there is no bit adjacent to the third bit, the third terminal group does not need to continue to detect a next bit adjacent to the third bit. If the third terminal group detects that the third bit is 1, it indicates to wake up the third terminal group on the occasion 3, and the third terminal group receives the wake-up information 3 on the occasion 3, and determines, based on the wake-up information 3, to wake up the third terminal. After the third terminal is woken up, the third terminal (for example, an MR of the third terminal) monitors the DCI that is delivered by the network device and that is carried on the PDCCH, and determines, from the DCI through complex blind detection, scheduling information corresponding to the third terminal.

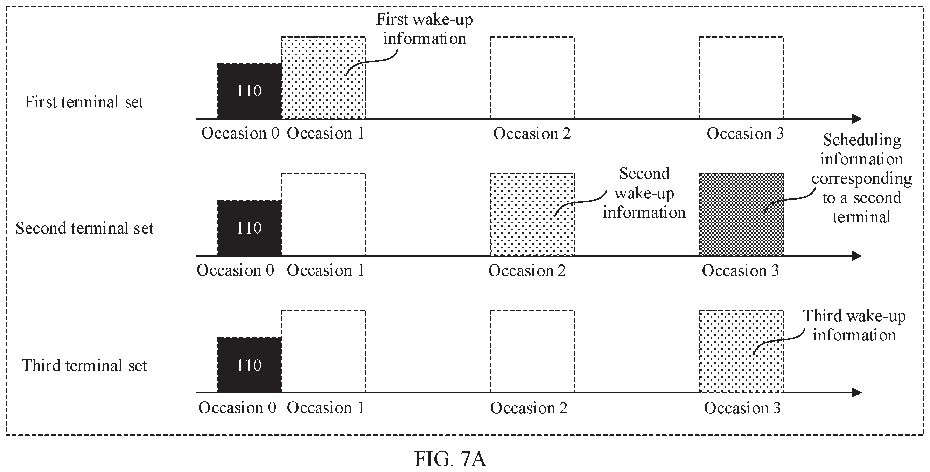

For another example, as shown in FIG. 7A, the third indication information is 110, and 110 sequentially indicates the first terminal group, the second terminal group, and the third terminal group. A monitoring occasion allocated by the network device to the first terminal group is an occasion 1, a monitoring occasion allocated to the second terminal group is an occasion 2, and a monitoring occasion allocated to the third terminal group is an occasion 3. It should be noted that the network device may indicate, to terminal groups through higher layer signaling (for example, DCI or RRC), a terminal group indicated by each bit in the third indication information sent each time. The network device separately sends the third indication information 110 to the first terminal group, the second terminal group, and the third terminal group on an occasion 0. After receiving the third indication information, each terminal in the first terminal group detects that a first bit of the third indication information is 1, indicating each terminal in the first terminal group to detect wake-up information 1 on the occasion 1. The wake-up information 1 is used to wake up the first terminal in the first terminal group. Each terminal in the first terminal group continues to detect that a second bit of the third indication information is 1, indicating the second terminal group to detect wake-up information 2 on the occasion 2. After the first terminal is woken up, the first terminal monitors DCI that is delivered by the network device and that is carried on a PDCCH, and determines, from the DCI through complex blind detection, scheduling information corresponding to the first terminal. After receiving the third indication information, each terminal in the second terminal group detects that the second bit of the third indication information is 1, indicating each terminal in the second terminal group to receive the wake-up information 2 on the occasion 2. The wake-up information 2 is used to wake up the second terminal in the second terminal group. Each terminal in the second terminal group continues to detect that the third bit of the third indication information is 0, indicating the third terminal group not to detect the wake-up information 3 on the occasion 3, and indicating the third terminal group to be in a sleep state or an off state, and the network device delivers scheduling information corresponding to the second terminal on the occasion 3. Similarly, after receiving the third indication information, each terminal in the third terminal group detects that the third bit of the third indication information is 0, indicating not to wake up each terminal in the third terminal group on the occasion 3, or indicating each terminal in the third terminal group to be in an off state or in a sleep state. Because the third indication information is 3-bit information and there is no fourth-bit information, after each terminal in the third terminal group detects the third bit of the third indication information, bit detection ends.

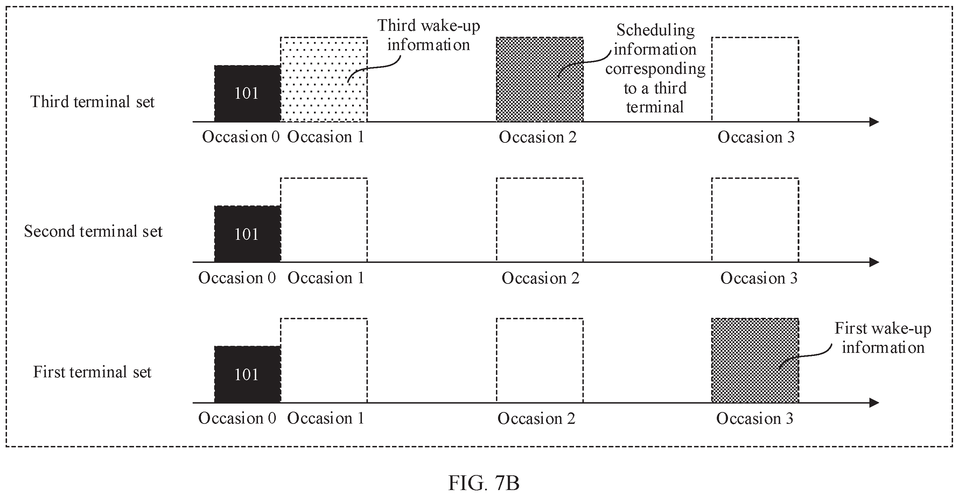

For another example, as shown in FIG. 7B, for example, the third indication information is 101, and 101 sequentially indicates the third terminal group, the second terminal group, and the first terminal group. A monitoring occasion allocated by the network device to the third terminal group is an occasion 1, a monitoring occasion allocated to the second terminal group is an occasion 2, and a monitoring occasion allocated to the first terminal group is an occasion 3. The network device separately sends the third indication information 101 to the first terminal group, the second terminal group, and the third terminal group on the occasion 0. After receiving the third indication information, each terminal in the first terminal group detects that a third bit of the third indication information is 1, indicating each terminal in the third terminal group to detect wake-up information 3 on the occasion 1. The wake-up information 3 is used to wake up a third terminal in the third terminal group. Each terminal in the third terminal group continues to detect that a second bit of the third indication information is 0, indicating the second terminal group not to detect wake-up information 2 on the occasion 2, and indicating the second terminal group to be in an off state or a sleep state. The network device delivers, on the occasion 2, scheduling information corresponding to the third terminal. After being woken up, the third terminal receives, on the occasion 2, the scheduling information corresponding to the third terminal. After receiving the third indication information, each terminal in the second terminal group detects that the second bit of the third indication information is 0, indicating each terminal in the second terminal group not to detect the wake-up information 2 on the occasion 2. The wake-up information 2 is used to wake up the second terminal in the second terminal group. Each terminal in the first terminal group detects that the third bit of the third indication information is 1, indicating the first terminal group to detect the wake-up information 1 on the occasion 3. After being woken up, the first terminal needs to receive, from the network device, DCI carried on a PDCCH, and determine, from the DCI through complex blind detection, scheduling information corresponding to the first terminal. Because the third indication information is 3-bit information and there is no fourth-bit information, after each terminal in the first terminal group detects the third bit of the third indication information, bit detection ends.

In a possible implementation, the third indication information is carried in the second wake-up information, the second wake-up information is located on the third occasion, and the third occasion is before the first occasion.

As described above, the third indication information may be used as a separate wake-up information (for example, LP-WUS) format, or may be placed before a piece of wake-up information (for example, an LP-WUS) in a period. When the third indication information is used as wake-up information in a separate format, the third indication information may be sent to the terminal groups together with the wake-up information (for example, the second wake-up information) sent by the network device. The second wake-up information is used to wake up a terminal device in a terminal group. The first occasion is an occasion on which the first terminal group detects the wake-up information (for example, the first wake-up information). The network device needs to deliver the third indication information before the first occasion, so that the first terminal group can determine whether to wake up and detect the wake-up information on the first occasion.

For example, as shown in FIG. 7A, the first terminal group receives the third indication information 110 on the occasion 0 (for example, the third occasion), and receives the first wake-up information on the occasion 1 (for example, the first occasion), where the occasion 0 is before the occasion 1. In this way, the first terminal may determine, based on the first bit indicated by the third indication information being 1, to detect the first wake-up information on the occasion 1.

It can be learned that, on the third occasion, the first terminal receives the second wake-up information, and determines, based on the third indication information in the second wake-up information, terminal groups that need to detect the wake-up information on different occasions. In this way, each terminal group can be notified in time of an occasion on which the terminal group needs to be woken up, to avoid a case in which some terminal groups still monitor the wake-up information on an occasion on which the terminal groups do not need to detect the wake-up information.

In a possible implementation, the second wake-up information is a first piece of wake-up information on the third occasion.

The third indication information is carried in the second wake-up information, and the second wake-up information is the first piece of wake-up information on the third occasion. This is equivalent to that the third indication information is carried in first wake-up information on the third occasion, so that the terminal can quickly obtain the third indication information through parsing.

In a possible implementation, that the fourth information indicates whether the first terminal group is to detect the wake-up information on the first occasion includes: A format of the fourth information indicates whether the first terminal group is to detect the wake-up information on the first occasion.

The fourth information is wake-up information, and the format of the fourth information may have different representation forms. Each form may indicate whether a terminal group is to detect the wake-up information on a corresponding occasion. For example, the fourth information may be represented in a form C or a form D. The network device may indicate, in the form C of the fourth information, the first terminal group to detect the wake-up information on the first occasion, and indicate, in the form D, the first terminal group not to detect the wake-up information on the first occasion. In this way, whether the first terminal group is to detect the wake-up information on the first occasion can be indicated by the format of the fourth information, and no additional indication information needs to be carried, thereby helping reduce resource overheads.

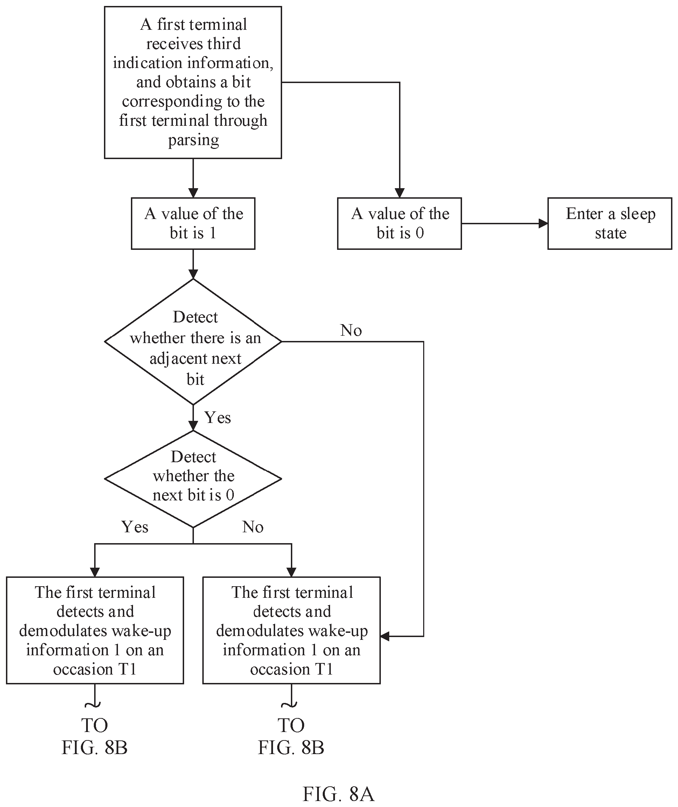

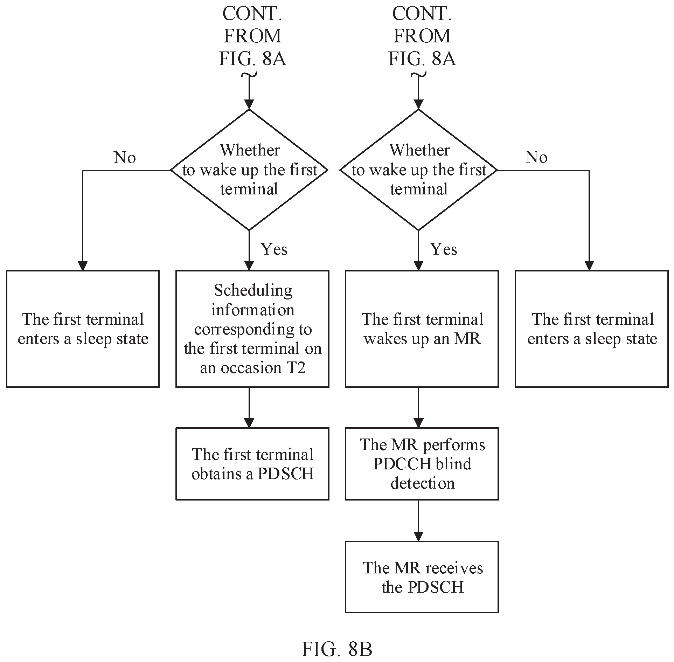

For ease of understanding, with reference to specific procedure steps of a communication method shown in FIG. 8A and FIG. 8B, an example in which a terminal side (for example, a first terminal) performs the communication method 600 is used to describe the process.
(1) After receiving third indication information, the first terminal parses each bit in the third indication information, and determines a bit corresponding to a first terminal group in which the first terminal is located.
(2) If the bit is 0, each terminal in the first terminal group enters a sleep state. For example, the first terminal enters the sleep state.
(3) If the bit is 1, it is detected whether there is a next bit adjacent to the bit.
(4) If there is a next bit, it is detected whether the next bit is 0. If the next bit is 0, the first terminal detects and demodulates wake-up information 1 on an occasion T1. The first terminal determines, based on the wake-up information 1, whether the first terminal is to be woken up. If it is determined that the first terminal is woken up, the first terminal detects corresponding scheduling information on an occasion T2. If it is determined that the first terminal is not to be woken up, the first terminal enters the sleep state.
(5) If it is detected that the next bit is 1, the first terminal detects and demodulates the wake-up information 1 on the occasion T1. The first terminal determines, based on the wake-up information 1, whether the first terminal is woken up. If it is determined that the first terminal is woken up, the first terminal wakes up an MR, and the MR monitors DCI that is delivered by a network device and that is carried on a PDCCH, determines the scheduling information of the first terminal through complex blind detection, and determines a PDSCH based on the scheduling information of the first terminal. The MR receives the PDSCH. If it is determined that the first terminal is not woken up, the first terminal enters the sleep state.

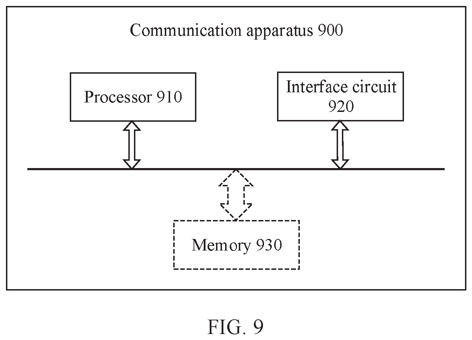

As shown in FIG. 9, this application provides a diagram of a structure of another communication apparatus 900. In a possible implementation, the communication apparatus 900 may be a terminal device (or a network device), or may be a module (for example, a processor, a chip, or a chip system) used in a terminal device (or a network device) for execution, or may be a logical node, a logical module, or software that can implement all or some functions of a terminal device (or a network device).

In a possible implementation, the communication apparatus 900 may be a chip or a chip system. The chip system may include a chip, or may include a chip and another discrete component. When the communication apparatus 900 is the chip, the chip includes a transceiver unit and a processing unit. The transceiver unit may be an input/output circuit or a communication interface. The processing unit is a processor, a microprocessor, an integrated circuit, or a logic circuit integrated on the chip. Optionally, a component that is in the transceiver unit and that is configured to implement a receiving function may be considered as a receiving unit, and the receiving unit corresponds to an input circuit of the chip. A component that is in the transceiver unit and that is configured to implement a sending function may be considered as a sending unit, and the sending unit corresponds to an output circuit of the chip. In other words, the transceiver unit includes the receiving unit and the sending unit.

In a possible implementation, the communication apparatus 900 may include a processor 910 and an interface circuit 920. The processor 910 and the interface circuit 920 communicate with each other. It may be understood that the interface circuit 920 may be a transceiver or an input/output interface. The transceiver includes a transmitter and/or a receiver. The transmitter is configured to implement a sending function, and the receiver is configured to implement a receiving function.

Optionally, the communication apparatus 900 may further include a memory 930. The memory 930 communicates with the processor 910 and the interface circuit 920 through an internal connection path. The memory 930 is configured to store a computer program and instructions, and the processor 910 may execute the computer program and the instructions stored in the memory 930.

In a possible implementation, the communication apparatus 900 is configured to implement the procedures and operations corresponding to the terminal device (or the network device) in the method 500 or the method 600.

It should be understood that the communication apparatus 900 may be specifically the terminal device (or the network device) in the method 500 or the method 600, or may be a chip or a chip system. Correspondingly, the interface circuit 920 may be a transceiver circuit of the chip. This is not limited herein. Specifically, the communication apparatus 900 may be configured to perform the operations and/or procedures corresponding to the terminal device (or the network device) in the foregoing method embodiments. Optionally, the memory 930 may include a read-only memory and a random access memory, and provide instructions and data to the processor. A part of the memory may further include a non-volatile random access memory. For example, the memory may further store information about a device type. The processor 910 may be configured to execute the instructions stored in the memory, and when the processor 910 executes the instructions stored in the memory, the processor 910 is configured to perform the operations and/or procedures corresponding to the terminal device (or the network device) in the method 500 or the method 600.

During implementation, the operations in the foregoing methods may be completed by using a hardware integrated logic circuit in the processor or instructions in a form of software. The operations in the methods disclosed with reference to embodiments of this application may be directly completed by a hardware processor, or may be completed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the operations in the methods in combination with the hardware of the processor. To avoid repetition, details are not described herein again.

It should be noted that, the processor in embodiments of this application may be an integrated circuit chip, and has a signal processing capability. During implementation, the operations in the foregoing method embodiments may be completed by using a hardware integrated logic circuit in the processor or instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform methods, operations, and logical block diagrams disclosed in embodiments of this application. The general-purpose processor may be a microprocessor, or the processor may be any conventional processor or the like. The operations in the methods disclosed with reference to embodiments of this application may be directly completed by a hardware decoding processor, or may be completed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the operations in the methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and method described in this specification includes but is not limited to these memories and any memory of another appropriate type.

According to the methods provided in embodiments of this application, this application further provides a computer program product. The computer program product includes computer program code. When the computer program code is run on a computer, the computer is enabled to perform the operations or procedures performed by the terminal device (or the network device) in the method 500 or the method 600.

According to the methods provided in embodiments of this application, this application further provides a computer-readable storage medium. The computer-readable storage medium stores program code. When the program code is run on a computer, the computer is enabled to perform the operations or procedures performed by the terminal device (or the network device) in the method 500 or the method 600.

According to the methods provided in embodiments of this application, this application further provides a communication system. The communication system includes one or more terminal devices and one or more network devices in the foregoing method 600.

The foregoing apparatus embodiments completely correspond to the method embodiments. A corresponding module or unit performs a corresponding operation. For example, a communication unit (transceiver) performs a receiving operation or a sending operation in the method embodiments, and a processing unit (processor) may perform an operation other than the sending operation and the receiving operation. A function of a specific unit may be based on a corresponding method embodiment. There may be one or more processors.

In embodiments of this application, the terms and English abbreviations are all examples given for ease of description, and should not constitute any limitation on this application. This application does not exclude a possibility of defining, in an existing or future protocol, another term that can implement same or similar functions.

It should be understood that "and/or" in this specification describes an association relationship between associated objects, and indicates that three relationships may exist. For example, A and/or B may indicate the following three cases: Only A exists, both A and B exist, and only B exists. A and B may be in a singular or plural form. The character "/" generally indicates an "or" relationship between associated objects.

A person of ordinary skill in the art may be aware that the illustrative logical blocks (illustrative logical blocks) and operations described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement the foregoing embodiments, all or some of embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the operations in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

## Claims

1. A communication method, wherein the method comprises:
generating first information, wherein the first information comprises second information and third information, the second information is used to wake up a first terminal and determine the third information, and the third information is used to schedule a first transmission resource of the first terminal; and
sending the first information.

2. The method according to claim 1, wherein before sending the first information, the method further comprises:
sending first indication information, wherein the first indication information indicates that the first information comprises the second information and the third information.

3. A communication method, wherein the method comprises:
receiving first information, wherein the first information comprises second information and third information, the second information is used to wake up a first terminal, and the third information is used to schedule a first transmission resource of the first terminal; and
determining the first transmission resource based on the third information.

4. The method according to claim 3, wherein before receiving the first information, the method further comprises:
receiving first indication information, wherein the first indication information indicates that the first information comprises the second information and the third information.

5. The method according to claim 1 or 3, wherein the first information further comprises fourth indication information, and the fourth indication information indicates that the first information comprises the second information and the third information.

6. The method according to claim 1 or 3, wherein a format of the first information indicates that the first information comprises the second information and the third information.

7. The method according to any one of claims 1 to 6, wherein the second information is an identifier of the first terminal.

8. The method according to any one of claims 1 to 6, wherein the first information comprises a bitmap, and the second information is a first bit in the bitmap.

9. The method according to claim 8, wherein an offset of the first bit is indicated by second indication information, or an offset of the first bit is determined based on a length of the second information and a ranking of the first terminal, or an offset of the first bit is predefined.

10. The method according to any one of claims 1 to 9, wherein the first information is periodically sent information, a first period and a second period are two adjacent periodicities, and the third information in the first information in the second period is different from the third information in the first information in the first period.

11. A communication method, wherein the method comprises:
generating fourth information, wherein the fourth information indicates whether a first terminal group is to detect wake-up information on a first occasion, and the first terminal group comprises at least one terminal; and
sending the fourth information, wherein if the fourth information indicates the first terminal group to detect the wake-up information on the first occasion, the first occasion is an occasion on which the first terminal group detects first wake-up information; or
if the fourth information indicates the first terminal group not to detect the wake-up information on the first occasion, the first occasion is an occasion on which the terminal group does not detect the wake-up information.

12. The method according to claim 11, wherein the fourth information is comprised in third indication information, the third indication information further comprises fifth information, the fifth information is a less significant bit adjacent to the fourth information, and the fifth information indicates whether a second terminal group is to detect the wake-up information on a second occasion; and if the fifth information indicates the second terminal group not to detect the wake-up information on the second occasion, sending sixth information on the second occasion, wherein the sixth information is used to schedule a first transmission resource of a first terminal, and the first terminal belongs to the first terminal group; or if the fifth information indicates the second terminal group to detect the wake-up information on the second occasion, sending seventh information, wherein a format of the seventh information is different from a format of the sixth information, the seventh information is used to schedule the first transmission resource of the first terminal, and the first terminal belongs to the first terminal group.

13. The method according to claim 12, wherein the third indication information comprises a plurality of bits, there is a preset one-to-one correspondence between the plurality of bits and a plurality of terminal groups, each of the plurality of bits indicates a different terminal group in the plurality of terminal groups, and before sending the fourth information, the method further comprises:
sending eighth information, wherein the eighth information indicates a terminal group corresponding to each of the plurality of bits received each time.

14. A communication method, wherein the method comprises:
receiving fourth information, wherein the fourth information indicates whether a first terminal group is to detect wake-up information on a first occasion, and the first terminal group comprises at least one terminal; and
if the fourth information indicates the first terminal group to detect the wake-up information on the first occasion, detecting first wake-up information on the first occasion; or
if the fourth information indicates the first terminal group not to detect the wake-up information on the first occasion, determining not to detect the wake-up information on the first occasion.

15. The method according to claim 14, wherein the fourth information is comprised in third indication information, the third indication information further comprises fifth information, and the fifth information is a less significant bit adjacent to the fourth information; and
if the fourth information indicates the first terminal group to detect the wake-up information on the first occasion, the method further comprises:
determining the fifth information, wherein the fifth information indicates whether a second terminal group is to detect the wake-up information on a second occasion; and
if the fifth information indicates the second terminal group not to detect the wake-up information on the second occasion, determining to receive sixth information on the second occasion, wherein the sixth information is used to schedule a first transmission resource of a first terminal, and the first terminal belongs to the first terminal group; or
if the fifth information indicates the second terminal group to detect the wake-up information on the second occasion, determining to receive seventh information, wherein a format of the seventh information is different from a format of the sixth information, the seventh information is used to schedule the first transmission resource of the first terminal, and the first terminal belongs to the first terminal group.

16. The method according to claim 15, wherein the third indication information comprises a plurality of bits, there is a preset one-to-one correspondence between the plurality of bits and a plurality of terminal groups, each of the plurality of bits indicates a different terminal group in the plurality of terminal groups, and before receiving the fourth information, the method further comprises:
receiving eighth information, wherein the eighth information indicates a terminal group corresponding to each of the plurality of bits received each time.

17. The method according to any one of claim 12, 13, 15, or 16, wherein the third indication information is carried in second wake-up information, the second wake-up information is located on a third occasion, and the third occasion is before the first occasion.

18. The method according to claim 17, wherein the second wake-up information is a first piece of wake-up information on the third occasion.

19. The method according to claim 11 or 14, wherein that the fourth information indicates whether the first terminal group is to detect the wake-up information on the first occasion comprises:
a format of the fourth information indicates whether the first terminal group is to detect the wake-up information on the first occasion.

20. A communication apparatus, wherein the communication apparatus comprises a module configured to perform the method according to any one of claims 1 and 2 and claims 5 to 10, or comprises a module configured to perform the method according to any one of claims 3 to 10, or comprises a module configured to perform the method according to any one of claims 11 to 13 and claims 17 to 19, or comprises a module configured to perform the method according to any one of claims 14 to 19.

21. A communication apparatus, wherein the communication apparatus comprises a processor; and
the processor is configured to execute a computer program or instructions in a memory, and when the computer program or the instructions are executed by the processor, the communication apparatus is enabled to implement the method according to any one of claims 1 and 2 and claims 5 to 10, or the communication apparatus is enabled to implement the method according to any one of claims 3 to 10, or the communication apparatus is enabled to implement the method according to any one of claims 11 to 13 and claims 17 to 19, or the communication apparatus is enabled to implement the method according to any one of claims 14 to 19.

22. A computer-readable storage medium, wherein the computer-readable storage medium stores a computer program, and when the computer program is executed by a processor, the processor is enabled to perform the method according to any one of claims 1 and 2 and claims 5 to 10, or the processor is enabled to perform the method according to any one of claims 3 to 10, or the processor is enabled to perform the method according to any one of claims 11 to 13 and claims 17 to 19, or the processor is enabled to perform the method according to any one of claims 14 to 19.
